# FASCICULE DE BREVET EUROPEEN

(11) **EP 0 895 159 B1**
(45) Date de publication et mention de la délivrance du brevet: **09.10.2002**
(21) Numéro de dépôt: 98401855.6
(22) Date de dépôt: 21.07.1998
(51) Int. Cl.: G06F 11/14

(54) **Procédé de purge des tampons de liaisons séries à haut débit et dispositif de mise en oeuvre du procédé**
Verfahren zur Entleeren von Hochdurchsatzübertragungspuffern und Vorrichtung zur Ausführung des Verfahrens
Method for flushing high throughput transfer buffers and apparatus for carrying out the method

(30) Priorité: 31.07.1997 FR 9709817
(43) Date de publication de la demande: 03.02.1999
(73) Titulaire: BULL S.A., 78434 Louveciennes Cedex (FR)
(72) Inventeur: Abily, Jack, 78370 Plaisir (FR); Qian, Yu Jun Jean, 95800 Cergy-St-Christophe (FR)

(56) Documents cités:
- EP-A- 0 260 625
- EP-A- 0 306 244
- EP-A- 0 535 760

## Description

La présente invention concerne un procédé de purge des tampons de liaisons séries à haut débit ainsi qu'un dispositif de mise en oeuvre du procédé. L'invention concerne plus particulièrement un procédé et dispositif de purge des tampons de liaisons séries d'un circuit intégré ou deux circuits intégrés comportant un port parallèle série et série parallèle.

L'invention s'applique notamment lorsque l'on veut utiliser des liaisons séries gigabits ayant un taux d'erreur non nul, de l'ordre par exemple de 10⁻¹⁵ à 10⁻¹⁷, pour réaliser une liaison interne à un ensemble logique qui normalement est réalisé par une liaison parallèle qui n'est pas sujette aux perturbations. Cette substitution est motivée par le fait que les liaisons séries rapides présentent de nombreux avantages. Par exemple, les liaisons séries rapides ont une grande densité, une simplicité de connectique à bande passante identique et permettent une liaison longue, jusqu'à 10 mètres par exemple, ce qui est impossible avec des liaisons logiques internes standard.

Dans le cas où la liaison série est une liaison série à 1 Giga baud, et si l'on admet que deux ports de même type communiquent entre eux par la liaison série, et permettent à des machines, dont le taux d'erreurs est de l'ordre de 10⁻¹⁷ par corruption de messages et perte de calibration et/ou incohérence de protocole, de communiquer entre elles, on constate compte tenu du débit de la liaison série et du taux d'erreurs de la machine, que ce taux d'erreurs qui semble faible peut générer tous les deux jours une erreur importante et un dysfonctionnement de la machine.

L'invention peut s'appliquer, par exemple, lorsque l'activité d'une liaison série a été arrêtée suite à la détection d'une erreur et nécessite une procédure de reprise qui rend la perturbation invisible de l'utilisateur. En ce qui concerne la détection des erreurs sur la liaison série, on pourra se référer à la demande de brevet français déposée par la requérante le 26 juin 1997 sous le numéro 97 07997.

Il est connu des circuits intégrés comportant des interfaces entre un bus parallèle et un bus série, mais en général ceux-ci ne comportent pas de dispositif et procédé de recouvrement d'erreurs, car on part du principe que la communication ne comporte pas d'erreurs mettant en cause la liaison série, ou si celle-ci en comporte, les recouvrements d'erreurs sont faits dans une couche plus élevée (perte de calibration) au niveau du logiciel (Software).

Un premier but de l'invention est de proposer un procédé de purge des tampons de liaisons séries à haut débit permettant la mise ou remise en service des liens de la liaison qui étaient arrêtés en raison, par exemple, d'une perturbation.

Ce but est atteint par le fait que pour la purge des tampons de liaisons séries à haut débit utilisés entre un circuit transbordeur réalisant des opérations de déplacements de données, à savoir des lectures et des écritures, et au moins deux mémoires, le transbordeur étant relié à chaque mémoire par au moins deux voies, les opérations de déplacement de données étant constituées chacune d'une requête en déplacement suivie en retour d'une réponse, ou acquittement de la requête, le transbordeur utilisant au moins deux voies bidirectionnelles le reliant à une mémoire de manière cyclique avec entrelacement, pour une même opération, chaque tronçon de voie conservant l'ordre d'émission des requêtes, respectivement des réponses, d'un même train de requêtes, respectivement d'un même train de réponses, les réponses empruntant la même paire de voie série que les requêtes dont elles constituent l'acquittement, le procédé comporte
- une étape de mise du transbordeur dans un mode de fonctionnement dit d"'absorption" dans lequel les réponses sont acceptées
- une étape de génération d'une requête spécifique d'écriture et d'une requête spécifique de lecture dans tout ou partie des voies de la liaison série, les requêtes spécifiques étant sans effet sur les mémoires et comportant chacune un marqueur dit de "barrière" contenu dans un caractère de contrôle précédant et/ou suivant la requête, la marque de barrière se retrouvant également dans un caractère de contrôle associé à la réponse correspondante de chaque requête spécifique,
- une étape de cumul des réponses reçues comportant un marqueur de barrière, et
- une étape de comparaison des réponses reçues comportant un marqueur de barrière avec les requêtes spécifiques générées, pour permettre, soit la localisation d'une panne éventuelle dans le cas où des réponses attendues pour un marqueur de barrière sont manquantes, soit la reconnaissance que la purge de l'ensemble des voies a été effectuée dans le cas où toutes les réponses attendues avec un marqueur de barrière ont été reçues.

Selon une autre particularité, l'étape de comparaison des réponses reçues comportant un marqueur de barrière avec les requêtes spécifiques générées comporte une étape de comparaison du nombre de réponses reçues avec marqueur de barrière avec le nombre de requêtes spécifiques générées.

Selon une autre particularité, le ou les caractères de contrôle associés aux requêtes, respectivement aux réponses, comportent des informations concernant la source d'émission et les chemins empruntés par les requêtes, respectivement par les réponses, l'étape de comparaison des réponses reçues comportant un marqueur de barrière avec les requêtes spécifiques générées comportant une étape de lecture des informations contenues dans les caractères de contrôle des réponses avec marqueur de barrière et qui concernent la source d'émission et les chemins empruntés, pour permettre la localisation de pannes éventuelles de la liaison série.

Selon une autre particularité, l'étape de mise du transbordeur dans le mode "'absorption" est réalisée alors que la liaison série est déconnectée, la liaison série étant remise en route après la mise du transbordeur dans le mode "'absorption".

Selon une autre particularité, les requêtes spécifique d'écriture sont constituées de requêtes d'écriture partielle avec un masque nul afin de ne pas modifier l'état de la machine lors de la purge.

Selon une autre particularité, le transbordeur effectue des transferts de données par tranches de 4K octets maximum et mémorise dans des registres les informations sur le bloc de données transféré en cours et le prochain bloc de données à transférer pour permettre la reprise du transfert de données au point ou il était avant la défaillance.

Selon une autre particularité, lorsque l'étape de comparaison des réponses reçues, comportant un marqueur de barrière avec les requêtes spécifiques générées, débouche sur la reconnaissance que la purge de l'ensemble des voies a été effectuée, le transbordeur est remis en mode de fonctionnement normal dans lequel il utilise les voies le reliant à une mémoire de manière cyclique, avec entrelacement.

Selon une autre particularité, le procédé de purge des tampons de liaisons séries à haut débit est utilisé suite à une défaillance de la liaison telle qu'une perturbation électrique, après la remise en service ou réinitialisation de la liaison série et avant le redémarrage de l'application en cours au dernier point de reprise, sans réinitialisation de l'ensemble du système.

Selon une autre particularité, le procédé de purge des tampons de liaisons séries à haut débit est utilisé pour l'autotest par balayage du sous ensemble du réseau d'interconnexion des mémoires au transbordeur, la localisation de pannes éventuelles permettant la reconfiguration de la liaison dans un mode dégradé ignorant la ou les voies en panne.

Selon une autre particularité, chaque voie bidirectionnelle de la liaison série est constituée de deux câbles unidirectionnels dont les directions de transit de données sont opposées.

Un autre but de l'invention est donc de proposer un dispositif permettant la mise en oeuvre du procédé.

Ce but est atteint par le fait que le dispositif de mise en oeuvre du procédé de purge des tampons de liaisons séries à haut débit est appliqué à des liaisons séries à haut débit étant par un circuit transbordeur réalisant des opérations de déplacements de données, à savoir des lectures et des écritures, entre au moins deux mémoires, le transbordeur étant relié à chaque mémoire par au moins deux voies bidirectionnelles, les opérations de déplacements de données étant constituées chacune d'une requête en déplacement suivie en retour d'une réponse, ou acquittement de la requête, le transbordeur utilisant les voies le reliant à une mémoire de manière cyclique avec entrelacement, pour une même opération, chaque tronçon de voie conservant l'ordre d'émission des requêtes, respectivement des réponses, d'un même train de requêtes, respectivement d'un même train de réponses, les réponses empruntant la même voie que les requêtes dont elles constituent l'acquittement, le dispositif comportant
- des moyens de mise du transbordeur dans un mode de fonctionnement dit d"'absorption" dans lequel les réponses sont acceptées indépendamment de tout ordre d'arrivée sur les différentes voies et sont ignorées par le transbordeur,
- des moyens de génération d'une requête spécifique d'écriture et d'une requête spécifique de lecture dans chacune des voies de la liaison série, les requêtes spécifiques étant sans effet sur les mémoires et des moyens de générer dans ces requêtes un marqueur dit de "barrière" contenu dans un caractère de contrôle précédant et/ou suivant la requête, des moyens de générer un marqueur de barrière dans un caractère de contrôle associé à la réponse correspondante de chaque requête spécifique,
- des moyens de cumul des réponses reçues comportant un marqueur de barrière, et
- des moyens de comparaison des réponses reçues comportant un marqueur de barrière avec les requêtes spécifiques générées pour permettre soit la localisation d'une panne éventuelle dans le cas des réponses attendues comportant un marqueur de barrière sont manquantes, soit la reconnaissance que la purge de l'ensemble des voies a été effectuée dans le cas où toutes les réponses attendues comportant un marqueur de barrière ont été reçues.

Selon une autre particularité, le dispositif de purge des tampons de liaisons séries à haut débit comporte des moyens de comparaison du nombre réponses reçues avec marqueur de barrière avec le nombre de requêtes spécifiques générées.

Selon une autre particularité, le dispositif de purge des tampons de liaisons séries à haut débit comporte des moyens de générer des informations concernant la source d'émission et les chemins empruntés par les requêtes, respectivement par les réponses dans le ou les caractères de contrôle associés aux requêtes, respectivement aux réponses, le dispositif de purge comportant des moyens de lecture des informations contenues dans ces caractères de contrôle des réponses avec marqueur de barrière concernant la source d'émission et les chemins empruntés, pour permettre la localisation de pannes éventuelles de la liaison série.

Selon une autre particularité, le dispositif de purge des tampons de liaisons séries à haut débit comporte des moyens de traitement de données assurant la réinitialisation de la liaison série suivie de la mise du transbordeur dans le mode de fonctionnement dit d'absorption".

Selon une autre particularité, les moyens de traitement de données assurent la génération de requêtes spécifiques d'écriture et de lecture, les réponses avec marqueur de barrières aux requêtes spécifiques étant prises en compte par ces mêmes moyens de traitement de données.

Selon une autre particularité, les moyens de traitement de données comportent au moins un registre de cumul dont chaque bit est représentatif de la génération d'une requête spécifique, chaque réponse avec marqueur de barrière reçue par les moyens de traitement provoquant l'écriture d'un bit dit de "barrière" dans le registre de cumul pour permette la comparaison du nombre réponses reçues avec marqueur de barrière avec le nombre de requêtes spécifiques générées.

Selon une autre particularité, les moyens de traitement de données comportent des moyens de temporisation permettant la génération d'un message de détection d'une panne dans le cas où une réponse attendue avec marqueur de barrière est manquante après un laps de temps déterminé.

D'autres particularités et avantages de la présente invention apparaîtront plus clairement à la lecture de la description ci-après faite en référence aux dessins annexés dans lesquels :
- la figure 1 représente de manière schématique et simplifiée le système de liaison série reliant deux mémoires via un dispositif de transfert de données, dans lequel un processus de purge selon l'invention est réalisé,
- la figure 2 représente de manière schématique une partie détaillée d'un chemin ou lien de la liaison série de la figure 1,
- la figure 3A représente la partie un circuit intégré constituant un port d'interface série parallèle selon l'invention,
- la figure 3B représente le schéma général d'un circuit intégré incorporant un tel port d'interface,
- la figure 3C représente le schéma de la partie du circuit intégré constituant le circuit transbordeur (MOVER),
- la figure 4 représente le schéma d'architecture d'une machine utilisant le circuit intégré de la figure 3B,
- la figure 5 représente de manière schématique et simplifiée les fonctionnalités mises en oeuvre par l'architecture de la figure 3B, constituant le dispositif de purge des tampons de la liaison série selon l'invention,
- la figure 6 représente de manière schématique et simplifiée une partie d'un lien de la liaison série reliant le dispositif de transfert de donnée à une mémoire,
- la figure 7A représente un logigramme simplifié illustrant les étapes du processus de purge de la liaison série selon l'invention,
- la figure 7B représente un logigramme simplifié détaillant une partie des étapes du processus illustré à la figure 7A,
- la figure 8 représente schématiquement un réseau d'interconnexions auquel est appliqué le procédé de purge de liaisons série selon l'invention.

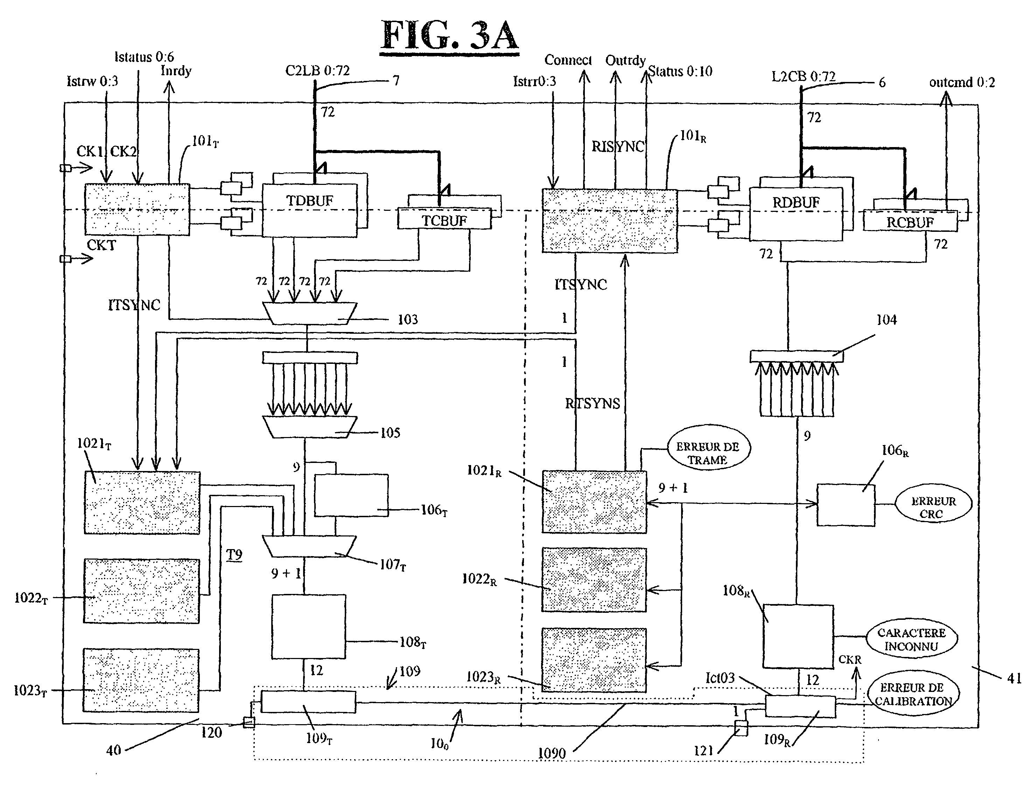

L'invention dont le procédé est explicité plus loin nécessite pour sa mise en oeuvre l'utilisation de ports tel que celui de la figure 3A.

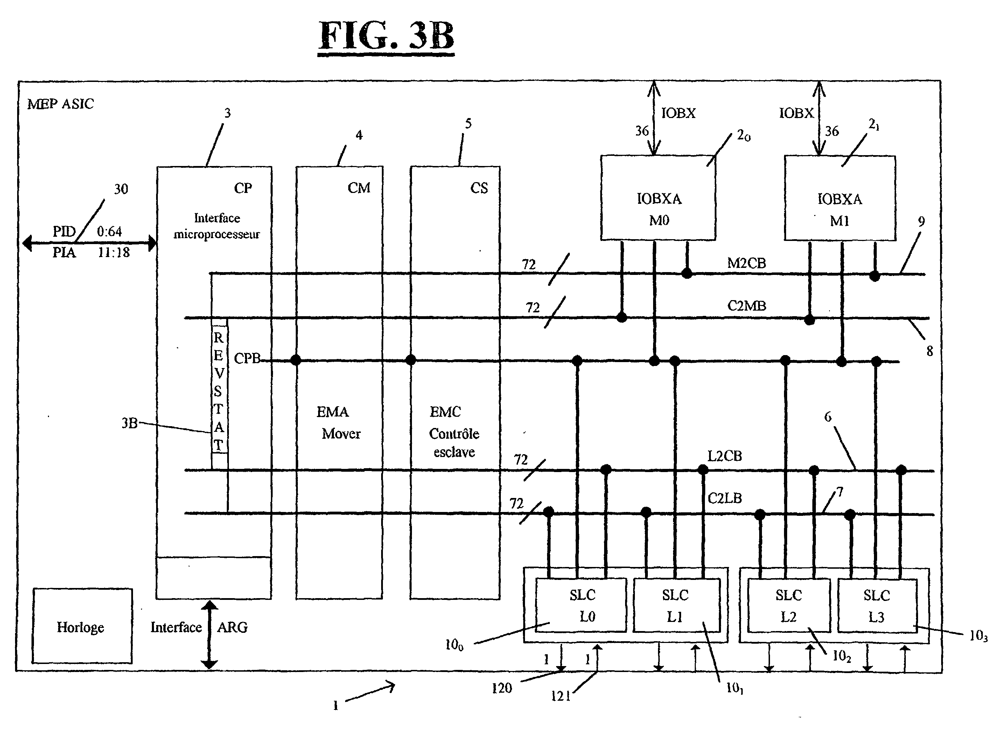

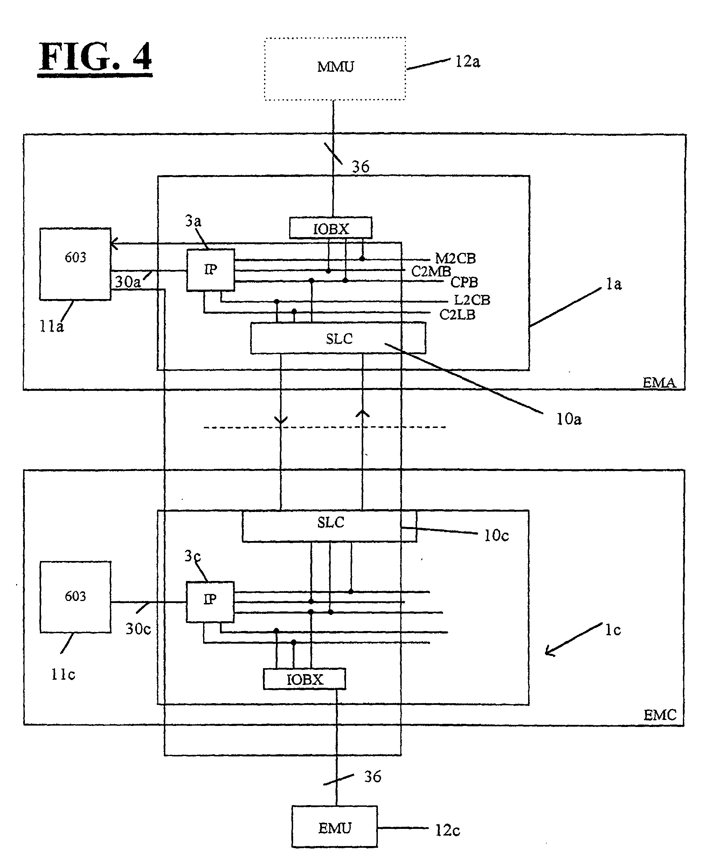

Le port 10₀ appelé bloc de contrôle de la liaison série SLC (Serial Link Control) est incorporé dans un circuit intégré du type de celui, par exemple, représenté à la figure 3B. Ce circuit intégré (1) comporte une pluralité de port 10⁰, 10¹, 10², 10³ du même type que celui de la figure 3A, lesquels communiquent à une fréquence système, par exemple de 33 MHz, avec deux bus parallèles de données de 72 bits, L2CB en entrée (6) et C2LB en sortie (7). Ces bus parallèles communiquent avec des circuits logiques (3, 4, 5) réalisant pour le circuit (3) une fonctionnalité d'interface avec un microprocesseur par l'intermédiaire d'un bus 64 bits (30), pour le circuit (4) une fonctionnalité de transbordement (MOVER) pour le circuit intégré lorsque celui-ci est incorporé dans une carte de type données, et pour le circuit (5) une fonctionnalité de contrôleur mémoire (Slave Control). Ces circuits (3, 4, 5) communiquent également par deux bus de données de 72 bits M2CB (9), C2MB (8), avec deux interfaces d'entrée sortie IOBX 2⁰, 2¹, qui permettent la communication avec des bus 36 bits provenant soit d'une mémoire (12a, fig. 4) principale MMU, soit d'une mémoire (12c) d'extension EMU comme représenté à la figure 4. Un bus de commande CPB permet au microprocesseur communiquant avec le circuit intégré (1) d'accéder aux registres de contrôle et de statut (Status) des différents circuits (3, 4, 5, 2, 10) présent dans le circuit intégré. Ce circuit intégré (1) est utilisé dans une machine comportant une mémoire principale (12a), une mémoire étendue (12c) partageable par plusieurs systèmes. Un premier circuit intégré (1a) maître selon l'invention communique par le bus (30a) avec un premier processeur (11a) et par l'interface IOBX avec la mémoire (12a), tandis qu'un deuxième circuit intégré (1c) esclave communique d'une part, avec le premier circuit maître (11a), et d'autre part par le bus (30c) avec un deuxième processeur (11c) et avec une mémoire étendue (12c). Le port (10a) de transmission parallèle série et de réception série parallèle du circuit (1a) comporte pour la partie émission (40, figure 3A) une paire de tampons de données (buffers) TDBUF de 8 x 72 bits reliés au bus de transmission C2LB. Un multiplexeur (103) permet de sélectionner l'un des deux tampons (buffers) TDBUF ou l'un des deux tampons (buffer) TCBUF de signaux de commande qui contiennent l'entête. Un buffer TCBUF et un buffer TDBUF peuvent être unifiés pour former un buffer TBUF. Les informations sortant du multiplexeur (103) sont envoyées sur un circuit (105) de désassemblage, lequel génère une succession de caractères de 9 bits constituant les caractères à transmettre. Ce circuit de désassemblage (105) est également relié à un circuit de génération de caractère de contrôle cyclique redondant CRC (106_{T}). Un second multiplexeur (107) permet de sélectionner les signaux transmis à un codeur (108_{T}) permettant le codage 9/12 des informations transmises en associant au caractère normal formé d'un nonet, un bit de contrôle et, en complétant à 12 bits par un bit de start et un bit de stop. Le multiplexeur (107) reçoit des signaux provenant d'une machine (1021T) d'état de transmission du lien série qui contient au moins un compteur à 2 bits de jetons, dont chaque bit représentant un jeton indique la disponibilité du tampon associé. Le multiplexeur (107) reçoit des signaux provenant d'une machine d'état de substitution (1022_{T}), et des signaux provenant d'une machine d'état d'initialisation du port (1023_{T}). La sortie du codeur (108_{T}) est reliée à un circuit sérialiseur (109_{T}) dont la sortie constitue une ligne série (120) qui émet des signaux à une vitesse par exemple de 1 Giga bits/sec. Le sérialiseur est également relié par une liaison série de rebouclage (1090) à un désérialiseur (109_{R}) du circuit de réception, ou partie réception (41) du port (10⁰). Cette liaison série de rebouclage (1090) est validée sur le désérialiseur (109_{R}) par un signal (lct03). Chaque tampon (buffer) de transmission est contrôlé par une machine d'état de gestion des tampons (buffers) de transmission (101_{T}) laquelle reçoit Istatus 0 : 6, Istrw 0 : 3, et émet le signal Inrdy. Dans la partie (41) réception, le désérialiseur (109_{R}) est relié à un décodeur (108_{R}) fonctionnant sur le même principe que le codeur (108_{T}) du circuit de transmission. Ce décodeur du circuit de réception envoie les 9 bits de chaque donnée sur un circuit (104) d'assemblage des données, pour transformer en message de (1 x 72, 3 x 72, 8 x 72, 9 x 72) bits les données reçues en série, qui sont chargées dans une paire de tampons (buffers) de réception de données (RDBUF). Cette paire de tampons (buffers) de réception de données (RDBUF) est contrôlée par une machine d'état de gestion des tampons (buffers) de réception (101_{R}) et est associée à une paire de tampons de réception de commande (RCBUF) qui contiennent les entêtes des messages. La sortie du décodeur (108_{R}) du circuit de réception est branchée à un circuit de code de vérification de messages élaborant un caractère de contrôle cyclique CRC (106_{R}) pour comparaison. Le CRC_{N+1} est mis à jour après chaque réception de 9 bits de données en calculant sur 16 bits le CRC par un algorithme de permutation cyclique à partir des données reçues Dᵢ et des valeurs Rᵢ des bits du CRC_{N} précédent. Bien sûr, on peut prévoir de calculer le CRC sur 18 bits au lieu de 16 bits. Les informations transmises par ce décodeur (108_{R}) sont également transmises d'une part, à une machine d'état constituant un tampon (buffer) d'historique (1022_{R}), et d'autre part, à une machine d'état du port de réception (1021_{R}), et enfin à une machine d'état d'initialisation (1023_{R}) du port. La machine (101_{R}) d'état de gestion du tampon (buffer) de réception émet trois signaux (Connect, Outrdy, Status 0 : 10), et reçoit en entrée sur trois lignes les informations (Istrr 0 : 3). Le signal (Outrdy) indique que la sortie est prête, ce signal indique qu'il y a un message complet en attente de lecture. Le signal Status indique le statut des sorties : interruptions ou non, opérations indivisibles ou non, accès mémoire/registres d'accès, local/éloigné ou ISCON/non ISCON, source micro/transbordeur (MOVER) / esclaves (SLAVE), réponses différées ou non, dernier message ou non, erreur de données ou non, accès hors mémoire ou non, message insignifiant ou non. La sortie Connect indique que le port SLC (10⁰) est déconnecté quand cette sortie est désactivée. Les entrées Istrr permettent la lecture des ports de réception en ordre FIFO, et la commande qui lit le dernier double mot d'un message engendre la génération d'un caractère de contrôle de flux (jeton) associé avec le tampon (buffer) qui devient ainsi libre. Ce caractère de contrôle de flux est transmis de la machine d'état de gestion des tampons (buffers) de réception (101_{R}) à la machine d'état de gestion de la transmission (1021T), et à travers celle-ci au multiplexeur (107) de façon à transmettre cette information au port (10c) d'entrée de la carte (1c) associée dans la liaison série au port (109_{R}) de réception dont on vient de lire les tampons (buffers) de réception (RDBUF). La machine d'état de gestion des tampons (buffers) de transmission (101_{T}) comporte deux entrées Istatus et Istrw, et une sortie Inrdy. Cette sortie Inrdy indique qu'il y a un tampon (buffer) de transmission (TDBUF) libre en attente pour être écrit. Les lignes Istatus permettent de préciser les types de message à écrire, et de déterminer en fonction de la valeur des deux premiers bits de status les significations suivantes : 00 ne sont pas utilisés, 01 il s'agit seulement de données, 10 il s'agit d'un entête (header), 11 il s'agit d'un entête et de données. Le troisième bit Istatus, indique s'il s'agit du dernier message ou non. Le quatrième bit, qu'il s'agit d'une erreur de données ou non ; et le cinquième bit si on a un accès extérieur à la mémoire ou non. Enfin le signal Istrw permet d'écrire les tampons (buffers) de transmissions (TDBUF) en ordre FIFO. Le signal Istrw qui écrit le dernier double mot d'un message initialise la transmission du message dès qu'un tampon (buffer) de réception (RDBUF) éloigné (par exemple du port 10c) est déclaré libre par un port de réception relié à la liaison série (120) et lorsque l'éventuelle transmission en cours depuis un autre tampon (buffer) d'émission du même port parallèle série est terminée.

La partie transbordeur (4) du circuit intégré comporte de chaque côté un circuit de calcul d'en-tête (40a, 40b). Un premier (40a) circuit de calcul d'en-tête est connecté au bus de transmission C2LB du circuit sérialisateur SLC et au bus de transmission C2MB du port IOBX. Un second (40b) circuit de calcul d'en-tête est connecté au bus de transmission C2LB des circuits sérialisateurs SLC, et au bus de transmission C2MB des ports IOBX. Ce circuit de calcul d'en-tête pour la réception (40a) reçoit des informations provenant des registres RLP, RPA, RIPA, RAC, les registres RLP recevant des informations du registre RNLP. Le registre RPA reçoit des informations du registre RNPA, ces deux registres RPA et RNPA étant des registres de 28 bits. Le registre RAC à 7 bits reçoit des informations du registre à 7 bits RNAC. Les registres RAC, RNAC, RIPA, RPA, RLP peuvent être accédés par la partie donnée du bus CPB, de même pour le registre RNLP, RNPA.

Une pile de registre FIFO (41) est connectée d'une part au bus de réception L2CB, M2CB, d'autre part, au bus de transmission C2LB, C2MB. Cette pile (41) de registre de 64 bytes de 9 bits est adressée en lecture par un registre DSRP et en écriture par un registre DSWP. Le circuit de calcul d'en-tête pour la transmission (40b) reçoit les informations des registres WPA, WIPA, OVFB, WMSKB, OVFE, WMSKE, l'ensemble de ces circuits étant contrôlé par un circuit de gestion des interruptions (42), un circuit de gestion d'événements (43) et un circuit de commandes (44). Le registre RIPA contient l'adresse interne d'une page formée sur 6 bits, le registre RPA contient l'adresse d'une page formée sur 28 bits, et ceci permettant d'accéder à une page courante de 4 Kbytes. Le registre RAC de 7 bits permet de compter les 64 bytes d'accès dans la page. Le registre RLP constitue une marque indiquant si la page est la dernière à être accédée.

Le registre RNPA de 28 bits indique l'adresse de la prochaine page, le registre RNAC de 7 bits contient le compte de 64 bytes d'accès dans la prochaine page, le registre RNLP est une marque indiquant si la prochaine page est la dernière à être accédée. Un registre RNV constitue une marque indiquant si ces trois précédents registres ont un contenu valide. Tous ces éléments sont les ressources qui permettent la génération d'adresse pour la mémoire source dans un transbordement.

De même, les ressources de génération d'adresse pour la mémoire de destination peuvent être divisées en trois parties. Une première ressource constitue les ressources pour gérer les accès d'écriture dans le premier et le dernier bloc de 64 bytes du transbordement. Ces premières ressources sont constituées d'un premier masque spécifiant les premiers 8 bytes du sous-bloc du premier bloc de transbordement à écrire et contenu dans le registre WMSKB de 3 bits. Un deuxième masque spécifie le dernier sous-bloc de 8 bytes dans le dernier bloc de déplacement à écrire, ce masque étant contenu dans un registre WMSKE de 3 bits. Un registre OVFE contient l'indication d'un accès d'écriture dans le premier bloc d'un transbordement. Un registre OVFE contient une indication d'un accès d'écriture dans le dernier bloc d'un transbordement. Une seconde ressource pour accéder à une page courante de 4 Kbytes est constituée d'un premier registre d'adresse WPA de 28 bits contenant l'adresse de la page et d'un registre WIPA de 6 bits contenant l'adresse à l'intérieur de la page. La troisième ressource donne des informations sur la prochaine page à accéder et est constituée d'un registre d'adresse WNPA contenant l'adresse de la prochaine page sur 28 bits, et un registre WNV qui constitue une marque indiquant si ces registres précédents ont un contenu valide.

La pile (41) FIFO de 64 bytes est un tampon de données dédié au transbordement pour gérer le non-alignement des adresses de départ de la MMU et de la EMU. Ce tampon (41) est une FIFO avec un pointeur de lecture DSRP de 3 bits et un pointeur d'écriture de 3 bits DSWP. Le circuit de commande (44) autorise le processeur (11) à arrêter un transbordement et à configurer le transbordeur d'une manière spéciale pour traiter une erreur fatale de liaison série. Le registre d'événements (43) mémorise la source d'une interruption destinée au circuit d'interface processeur (3). Le processeur (11) connecté au circuit (1) fournit les informations pour les accès de lecture à la première page de la mémoire source en donnant la direction de transfert par un bit E2M positionné à 1 pour un transfert de l'EMU vers la MMU, et à 0 pour un transfert de la MMU vers la EMU. Ce processeur charge également les adresses RPA, RIPA, le registre d'accès RAC et le registre RLP. Cette initialisation inhibe la transmission des accès d'écriture dans une mémoire de destination.

Le processeur fournit les informations pour les accès d'écriture à la première page de la mémoire de destination en chargeant : l'adresse de départ dans les registres WPA, WIPA, le masque d'écriture pour le premier et les derniers 64 bytes dans les registres WMSKB et WMSKE, le pointeur d'écriture de la FIFO, le pointeur de lecture de la FIFO et les registres OVFB, OVFE. Cette initialisation valide la transmission d'un accès d'écriture dans la mémoire de destination. De même, le processeur (11) fournit les informations pour la page suivante en chargeant les registres RNPA, RNLP et RNAC pour la mémoire ressource et, pour la mémoire de destination, le registre WNPA. Lorsque le registre RAC n'est pas égal à 0, le circuit permet la génération d'accès en lecture à la mémoire source. Lorsque la mémoire source est la mémoire EMU de la figure 4, les accès en lecture de l'EMU sont entrelacés sur deux liens série par bloc de 64 bytes transmis sur le lien série 10₀ pour les blocs ayant une adresse paire, et transmis par le lien série 10₁ pour les blocs ayant une adresse impaire.

Chaque fois qu'une requête de lecture est transmise, le registre RAC de compte d'accès est décrémenté par 1, 2 ou 4, et le registre d'adresse RIPA est incrémenté par 1, 2 ou 4, selon le type de la requête. Les réponses de données sont transmises sur deux liens série par bloc de 64 bytes selon la même règle d'entrelacement. De même, les accès lecture à la MMU sont entrelacés sur les deux interfaces IOBX, la première interface (2₀) pour les blocs de 64 bytes ayant une adresse paire et la deuxième interface (2₁)pour les blocs ayant une adresse impaire. Les registres RAC et RIPA sont respectivement décrémentés et incrémentés de 1 à chaque accès. Le circuit transbordeur mémorise l'identification du circuit de transmission SLC ou IOBX duquel provient le premier bloc de 64 bytes.

Le fonctionnement de la partie écriture est identique par utilisation des registres WPA, WIPA, les échanges se font également en mode entrelacé. Le transbordeur (4) adresse les requêtes de lecture à la mémoire source et utilise le pointeur DSWP d'écriture pour écrire les données de réponse dans la pile FIFO (41). Chaque fois qu'un sous-bloc de 8 bits est écrit, le registre DSWP est incrémenté de 1. Lorsque le transbordeur adresse des requêtes d'écriture à la mémoire de destination, il utilise le pointeur de lecture DSRP pour lire les données de la pile FIFO. Chaque fois qu'un sous-bloc de 8 bytes est lu, le registre DSRP est incrémenté de 1 et comme chaque fois qu'une requête d'écriture est émise, le circuit incrémente de 1 le registre WIPA.

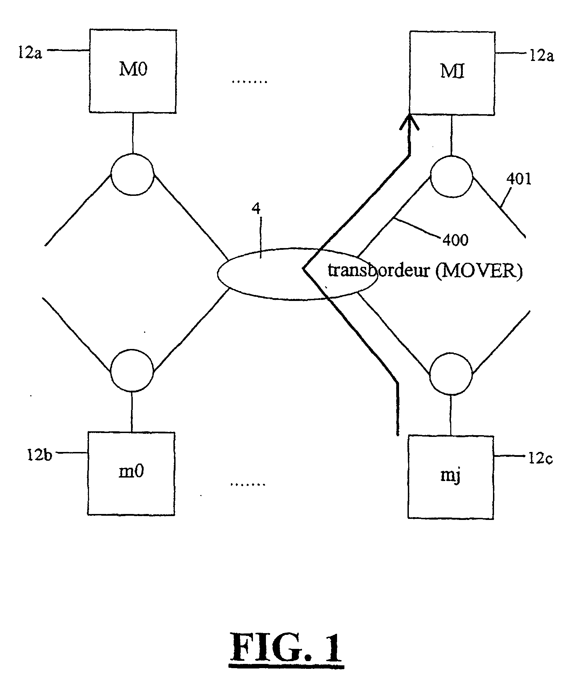

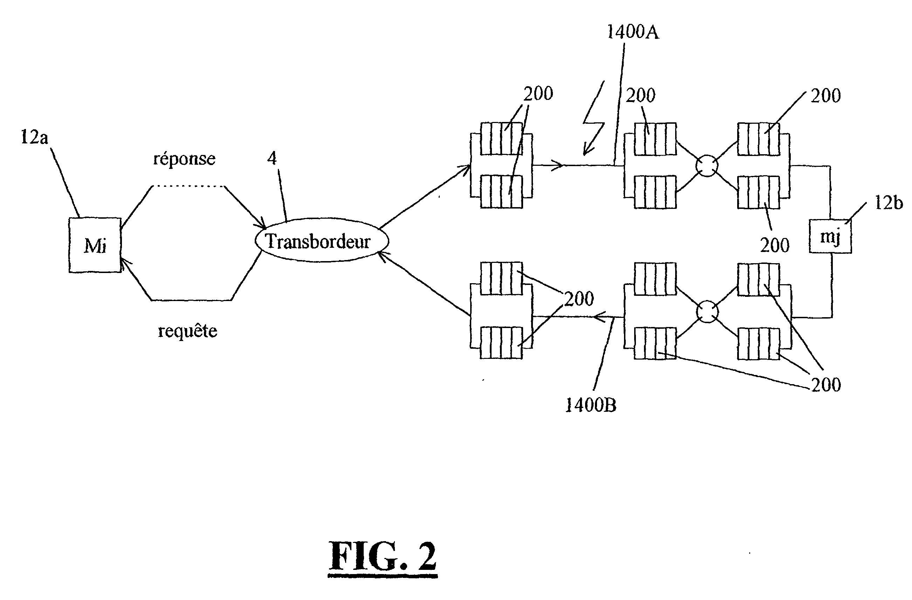

Le circuit intégré de la figure 3B, incorporé par exemple dans une carte de circuit électronique comportant des mémoires (Mo...Mi, mo...mj) réalise, par un circuit (4) transbordeur (MOVER), une fonctionnalité de déplacement de données entre les mémoires [(M0, ..., Mi], figure 1) et les mémoires [(mo, ..., mj], figure 1). Les mémoires [(M0, ..., Mi)] et [(m0, ..., mj] appartiennent, par exemple, respectivement à deux mémoires (12a, 12c) différentes telles que, par exemple, les mémoires MMU et EMU du circuit de la figure 4. Le transbordeur (4) peut utiliser plusieurs liaisons séries à haut débit (10₀, 10₁, 10₂, 10₃), par exemple deux liaisons séries bidirectionnelles (10₀, 10₁) à haut débit, pour réaliser les déplacements de données entre les deux mémoires (12a, 12c). Par exemple, le transbordeur (4) effectue des transferts de données entre une mémoire (12a) principale MMU et une mémoire (12c) d'extension EMU. Chaque liaison série (10₀, 10₁) constitue, par exemple, une voie (400, 401) ou chemins respectivement pair et impair. Chaque chemin (400, 401) ou voie utilise deux câbles (1400A, 1400B, figure 2) de transmission unidirectionnels dont les directions de transmission de données sont opposées. Les deux câbles (1400A, 1400B) de transmission unidirectionnels réalisent la transmission respectivement des requêtes et des réponses d'un même lien ou chemin (400, 401). Chaque chemin (400) comporte différents tampons (200, figure 2) constituant des étages de stockage temporaire pour traverser des cartes ou des bus par exemple. Les opérations transitant sur les voies (400, 401) des liaisons série sont constituées essentiellement d'opérations de lecture et d'écriture d'une zone mémoire (12a, 12c). Chaque opération (lecture ou écriture) est constituée d'une requête suivie en retour d'une réponse ou acquittement de la requête. C'est à dire que pour une opération de lecture d'une zone mémoire, une requête en lecture est générée, puis en retour, une réponse signifiant l'acquittement de la requête de lecture est retournée vers la source d'émission de la requête. De la même façon, les opérations d'écriture sont constituées chacune d'une requête en écriture suivie en retour d'une réponse ou acquittement de la requête en écriture. Les réponses empruntent la même voie (400, 401) que les requêtes dont elles constituent l'acquittement. Par ailleurs pour une source et un type d'opération donnés, l'ordre des réponses suit exactement l'ordre des requêtes dont elles constituent l'acquittement. C'est à dire que pour chaque voie (400, 401), l'ordre d'un train de réponses à un ordre de lecture est identique à l'ordre du train de requêtes de lecture dont elles constituent l'acquittement. Il en est de même pour les opérations d'écriture. Ainsi aucun "dépassement" n'est possible sur les chemins (400, 401). Cependant, le respect de l'ordre entre des opérations de lectures et des opérations d'écriture n'est pas forcément garanti. Les requêtes sont traitées en fonction des cartes disponibles, c'est à dire pas forcément dans leur ordre d'arrivée, mais les réponses correspondantes sont retournées à leur source dans l'ordre des requêtes. Dans son mode de fonctionnement dit "normal" le transbordeur (4) utilise les voies (400, 401) ou chemins de manière cyclique, avec entrelacement. Les données sont entrelacées sur les différentes voies (400, 401) de la liaison série. Comme mentionné précédemment, la liaison série peut comporter, par exemple, deux voies désignées respectivement voie paire (400) et voie (401) impaire. Le choix des voies paire (400) ou impaire pour les réponses ou requêtes dépend uniquement de leur adresse. Par exemple, pour une lecture de 256 octets (bytes), la source peut transmettre sa requête sur le voie (400) paire et peut recevoir les 64 premiers octets (bytes) lus sur cette même voie (400) paire, les seconds 64 (bytes) octets sur la voie (401) impaire, les troisièmes 64 octets (bytes) sur la voie (400) paire et enfin les 64 derniers octets sur la voie (401) impaire. Chacun des messages qui transite sur les voie (400, 401), à savoir les requêtes et les réponses, est précédé d'un caractère de contrôle indiquant le type et la longueur du message. Un second caractère de contrôle suit la fin du message et contient des informations sur le statut du message, c'est à dire, par exemple, si ce message est le dernier message d'une séquence et/ou si la mémoire a délivré un message d'erreur.

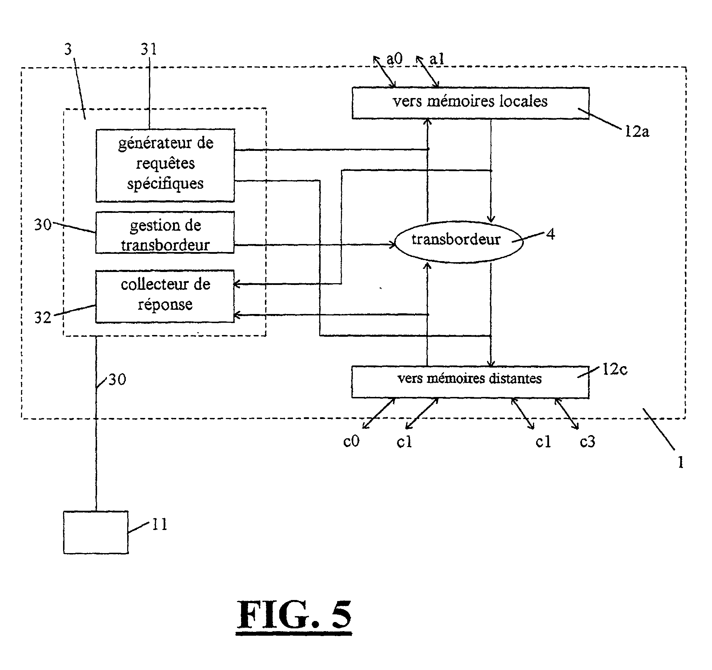

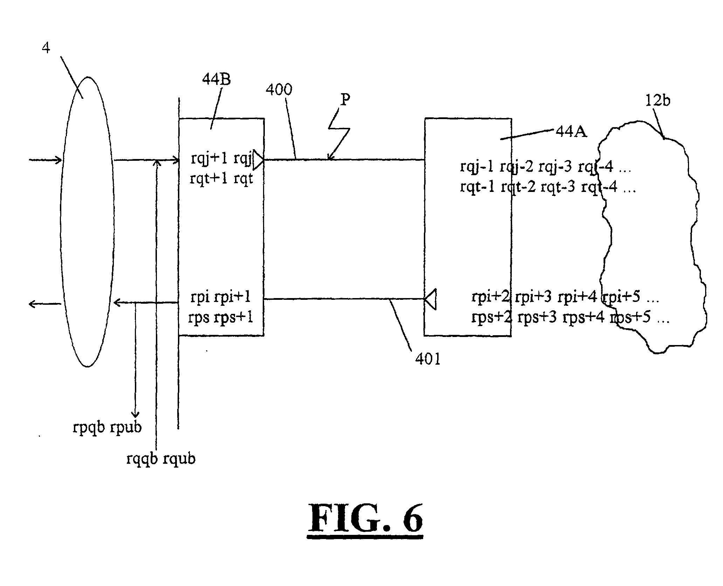

La figure 6 schématise sur un tronçon une liaison bidirectionnelle série à deux voies (400, 401), reliant le transbordeur (4) à une mémoire (12b), un flot de requêtes de lectures (rqj+1, rqj, rqj-1, rqj-2, rqj-3, rqj-4, ...) sur la première voie (400), et de réponses (..., rpi+5, rpi+4, rpi+3, rpi+2, rpi+1, rpi) de lecture sur la deuxième voie (401) qui sont entrelacés avec un flot de requêtes d'écriture (rqt+1, rqt, rqt-1, rqt-2, rqt-3, rqt-4,...) sur la première voie (400) et de réponses (..., rps+5, rps+4, rps+3, rps+2, rps+1, rps) d'écriture sur la deuxième voie (401). Une perturbation (P) intervenant sur le lien (400) de la première voie va bloquer la liaison. En effet, la détection d'erreur d'un côté (44A) de la liaison va générer une erreur de l'autre côté (44B) de la liaison. La perturbation (P) isole le lien. La détection d'erreur provoque une réinitialisation automatique de la liaison par l'intermédiaire, par exemple, d'une logique câblée comme cela est décrit, par exemple, dans les demandes antérieures de la requérante intitulées "Procédé de détection d'erreurs sur une liaison série d'un circuit intégré et dispositif de mise en oeuvre du procédé" et déposée en France sous le N°.97 07997, "Dispositif et procédé de détection d'erreurs sur un circuit intégré comportant un port parallèle série" déposée en France sous le numéro 97 01944 et "Procédé d'initialisation d'une liaison série entre deux circuits intégrés comportant un port parallèle série et dispositif de mise en oeuvre du procédé" déposée en France sous le N° 97 02974. La détection d'une erreur par le contrôleur de liaison série peut générer une interruption vers le microprocesseur (11, figure 5) qui gère le circuit intégré (1). Le microprocesseur (11) enclenche alors la réinitialisation de la liaison série. Ainsi, suite à la détection d'une erreur sur une liaison, les deux contrôleurs de liaison série (SLC) situés respectivement aux deux extrémités de la liaison se déconnectent par rapport à l'extérieur et se réinitialisent par l'intermédiaire du microprocesseur (11). Les messages (rqj+1, rqj, rqj-1, rqj-2; rpi+3, rpi+2, rpi+1, rpi) de lecture et les messages (rqt+1, rqt, rqt-1, rqt-2; rps+3, rps+2, rps+1, rps) d'écriture qui transitaient sur le lien (400) sont perdus lors de la réinitialisation du lien. Les messages qui ont été transmis à la mémoire (12b) avant la perturbation, sont bloqués dans les tampons (200) de la liaison en attendant la remise en service du lien bidirectionnel (400). Par exemple, les messages en attente sont bloqués dans les tampons ou registres FIFO. C'est à dire que, par exemple, les requêtes (rqj-3 et rqj-4, ...) et réponses (..., rpi+5, rpi+4) en lecture ainsi que les requêtes (..., rqt-3, rqt-4) et réponses (..., rps+5, rps+4) en écriture qui ont été transmises de manière complète vers la mémoire (12b) sont bloquées en attente de la remise en service du lien (400). Du point de vue de l'extérieur de la liaison série, c'est à dire pour le reste de la machine, la perturbation ne génère pas de messages erronés, en effet, seuls sont envoyés vers l'extérieur des messages complets et valides. La liaison qui est entrelacée avec le lien (400) défectueux est également bloquée. En effet, le transbordeur (4) attend les réponses d'une manière cyclique sur les liens (400, 401) entrelacés. De ce fait le transbordeur (4) finit rapidement par bloquer le lien (401) lorsqu'il attend une réponse du lien (400) défectueux. Si la liaison perturbée est remise en service après sa réinitialisation, tous les messages (rqj-3, rqj-4; rpi+5, rpi+4; rqt-3, rqt-4; rps+5, rps+4) bloqués dans les tampons vont reprendre leur écoulement dans la liaison. Ainsi, pour éviter que ne transitent sur le lien (401) des réponses d'opérations qui ont avorté du fait de la perturbation, tous les messages bloqués dans les tampons doivent être purgés.

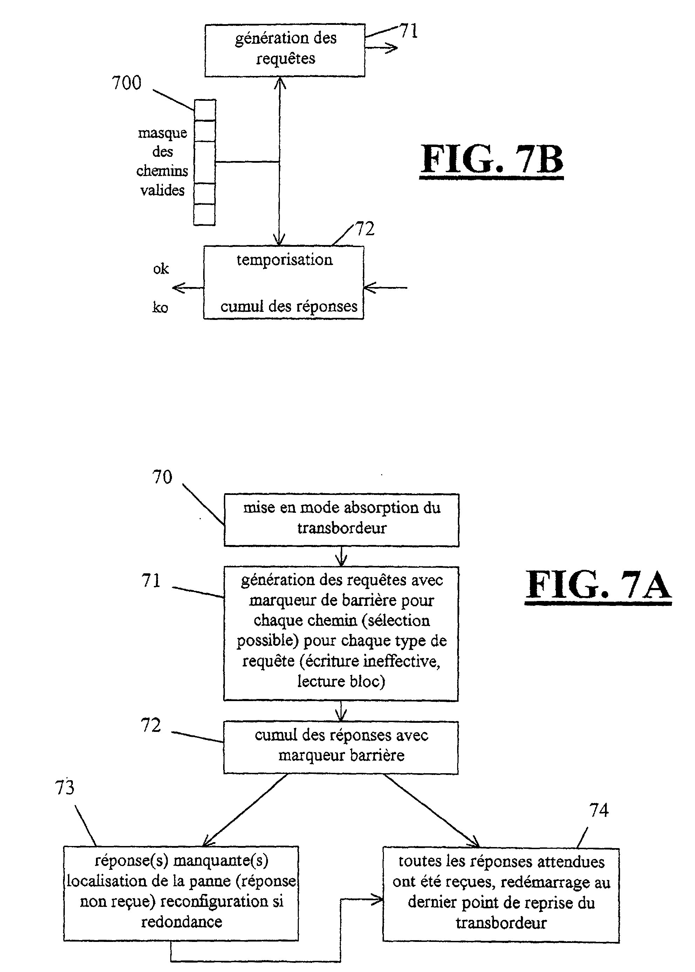

Le procédé de purge de la liaison selon l'invention comporte une première étape (70) dans laquelle le transbordeur (4) est mis dans un mode de fonctionnement dit d'absorption". Dans ce mode, le transbordeur (4) accepte les réponses aux requêtes quel que soit leur ordre d'arrivée sur les différentes voies (400, 401). C'est à dire que, dans le mode "absorption", le transbordeur (4) n'attend plus les réponses de manière cyclique. Par ailleurs, dans le mode "absorption", les réponses reçues sont ignorées par le transbordeur (4). Comme symbolisé à la figure 5, la mise du transbordeur en mode "absorption" peut être réalisée par le microprocesseur (11) qui gère le circuit intégré (1) à travers le circuit (3, figure 3B et 5) d'interface de ce circuit intégré (1) avec le bus 64 bits (30). Ainsi, le transbordeur (4) du circuit intégré (1) peut être mis dans son mode "absorption" par le microprocesseur (11) qui gère ce circuit intégré (1), par l'intermédiaire d'une logique (30) de gestion du transbordeur située dans le circuit d'interface (3). Lorsque le transbordeur (4) est dans son mode "absorption", la liaison série est remise en route et le processus se poursuit par une étape (71, figure 7A) au cours de laquelle une requête spécifique d'écriture et une requête spécifique de lecture sont générées dans chacune des voies (400, 401) de la liaison série. Chacune des requêtes spécifiques comporte un marqueur ou drapeau (flag) dit de "barrière" contenu dans le caractère de contrôle situé à la fin du message envoyé sur la voie. Le marqueur de barrière apparaît également dans le caractère de contrôle situé en début de message ou entête (header). C'est à dire que, pour chaque voie (400, 401) de la liaison, une requête spécifique avec marqueur de barrière de chaque type d'opération est générée. On rappelle que l'ordre des requêtes et réponses pour une même opération est conservé de manière stricte sur chaque voie (400, 401) ou chemin de la liaison. Les réponses des requêtes spécifiques comportent également les marques de barrières correspondantes dans leur caractère de contrôle de début ou entête (header). Les requêtes spécifiques sont en outre sans effet sur les mémoires, car elles ne modifient pas l'état de la machine. Ainsi, les requêtes spécifiques en écriture peuvent, par exemple, être des requêtes en écriture partielle avec masque nul, qui ne réalisent aucune écriture. Les requêtes spécifiques de lecture qui par définition ne modifient pas l'état de la mémoire peuvent être, par exemple, des opérations de lecture de blocs mémoire. La génération des requêtes spécifiques est réalisée par une logique (31) de génération de requête située dans le circuit d'interface (3) et commandée par le microprocesseur (11) qui gère le circuit intégré (1). Le circuit d'interface (3) comporte un séquenceur de requêtes commandé par le microprocesseur (11) pour assurer cette génération des requêtes spécifiques en disposant dans le caractère de contrôle d'en-tête (header) de chaque requête, la marque de barrière. Le processus de purge se poursuit ensuite par une étape (72, figure 7A) de cumul des réponses reçues comportant un marqueur de barrière. Ainsi, les réponses qui retournent vers la source correspondante des requêtes avec un marqueur de barrière, sont collectées par une logique (32) de cumul du circuit (3) d'interface. Cette logique (32), qui réalise la collecte ou cumul des réponses avec marqueur de barrière, comporte un registre de cumul revstat (33) dont chaque bit est représentatif de la génération d'une requête spécifique.

Chaque réponse a ses requêtes spéciales positionne un bit dans le registre revstat, parmi 6 bits, dans lesquelles les bits 0 à 4 pour indiquer si la réponse vient par le lien série 10₀ à 10₃ et les bits 4 à 6 pour indiquer si la réponse provient des IOBX de (2₀)ou (2₁), ainsi on détermine le chemin empreinté par les requêtes et respectivement par les réponses. Chaque réponse avec marqueur de barrière reçue par la logique (32) de cumul du circuit (3) d'interface provoque l'écriture d'un bit correspondant dit de "barrière" dans le registre de cumul (33). Le microprocesseur (11 ) qui gère le circuit intégré (1) va lire le registre de cumul revstat (33) pour vérifier que les réponses avec marqueur de barrière de toutes les requêtes spécifiques sont revenues. Le microprocesseur (11) effectue cette lecture du registre de cumul revstat (33) avec une certaine temporisation. De cette façon, si des réponses avec marqueur de barrière attendues sont manquantes, la logique (3) va pouvoir, à l'étape (73) suivante, localiser les pannes éventuelles de la liaison. En effet, les caractères de contrôle associés aux requêtes, respectivement aux réponses, comportent des informations concernant la source d'émission et les chemins empruntés par les requêtes, respectivement par les réponses. De cette manière, la logique (32) de cumul des réponses peut localiser la ou les pannes dans la liaison série en déterminant les chemins pour lesquels des réponses, attendues, ne sont pas revenues. Les données ineffectives des réponses avec marqueur de barrières sont ignorées par le circuit (3) d'interface.

La figure 7B représente de manière plus détaillée le processus de détermination des chemins valides de la liaison par la logique (3) d'interface. Un masque (700) des chemins valides est réalisé par la comparaison des processus de génération (72) de requêtes et de cumul (72) avec temporisation des réponses correspondantes. Comme indiqué à l'étape (73) la localisation de pannes éventuelles permet la reconfiguration de la liaison dans un mode dégradé ignorant la ou les voies en panne.

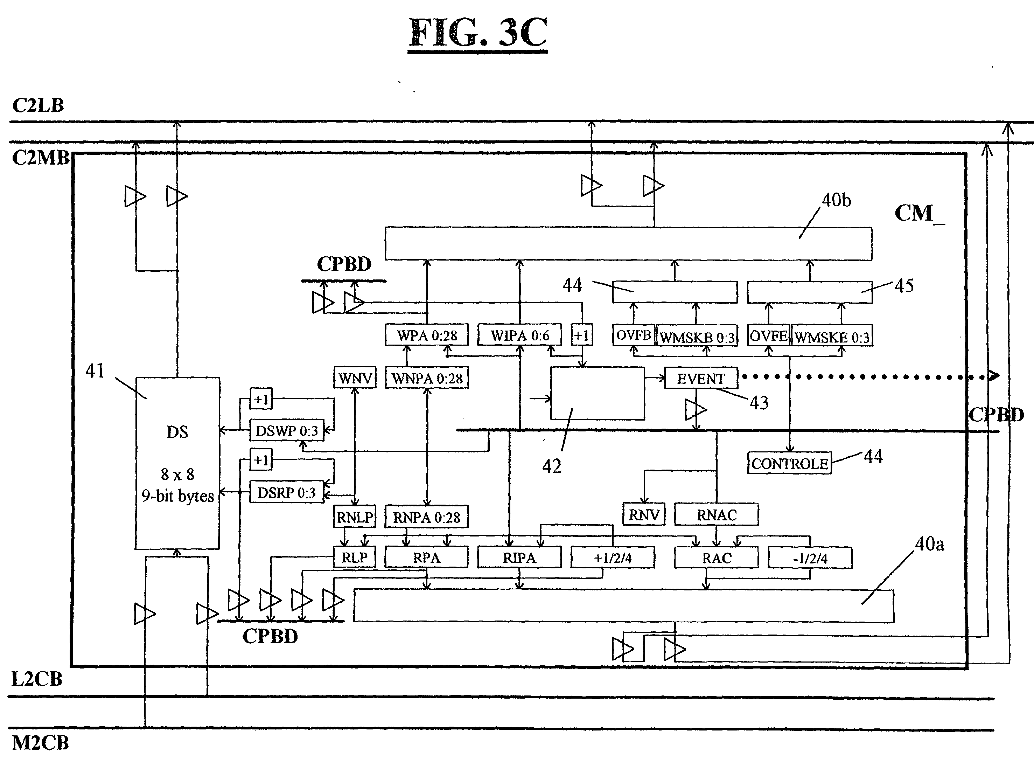

Dans le cas où toutes les réponses à marqueur de barrière attendues ont été reçues, le microprocesseur (11) reconnaît à l'étape (74) que le nettoyage ou purge de la liaison série est achevé et l'application en cours peut alors être relancée à partir du dernier point de reprise mémorisé dans le transbordeur (4). Par exemple, le dernier point de reprise du transbordeur (4) peut être mémorisé automatiquement à chaque réinitialisation dans un registre spécifique de la logique (3) d'interface, lequel registre est lu par le microprocesseur (11). Le microprocesseur peut ensuite remettre le transbordeur (4) en mode de fonctionnement "normal", dans lequel il utilise les voies le reliant à une mémoire, de manière cyclique et avec entrelacement. Le transbordeur (4) effectue des transferts de données, par tranches, par exemple de 4K octets au maximum et conserve dans des registres internes des informations sur le bloc de données qui est en cours de transfert et le prochain bloc de données à transférer. De cette manière le transbordeur (4) peut reprendre le transfert de données au point où il était avant toute défaillance de la liaison. Pour cela, le transbordeur (4), va rechercher, à chaque réinitialisation, ces informations caractérisant le bloc de données suivant à transmettre. Dans l'exemple de réalisation nullement limitatif décrit en liaison avec les figures 38 et 3C, la carte EMA dispose d'une part de quatre voies ou chemins (c0, c1, c2, c3) incorporant les circuits SLC (10₀ à 10₃) comme schématisé par la figure 5, vers la carte EMC de la mémoire (12c) d'extension EMU, ou mémoire distante et, d'autre part de deux chemins (a0, a1) vers la mémoire (12a) principale MMU ou mémoire locale incorporant les circuits IOBX (2₀ et 2₁). Dans ce cas, le processus de purge de l'ensemble des chemins va nécessiter la génération de six requêtes spécifiques de lecture avec marqueur de barrière et de six requêtes spécifiques d'écriture avec marqueur de barrière. Ainsi, le registre de cumul (revstat) correspondant de la logique (32) de cumul comprend 12 bits. Dans l'exemple décrit, les étapes du processus de purge de la liaison série sont réalisées par une logique câblée dont le séquencement est assuré par un programme exécuté par le microprocesseur (11). Bien sûr, sans sortir de l'esprit de l'invention, le processus de purge de la liaison série peut être réalisé par un dispositif entièrement câblé.

On conçoit que l'on a ainsi un processus et un dispositif de purge des tampons (buffer) de liaisons séries pouvant être mis en oeuvre facilement suite, par exemple, à une défaillance de la liaison telle qu'une perturbation électrique. Ce processus de purge de la liaison peut être mis en oeuvre après la remise en service ou réinitialisation de la liaison série et avant le redémarrage de l'application en cours au dernier point de reprise, sans pour autant nécessiter une réinitialisation de l'ensemble du système.

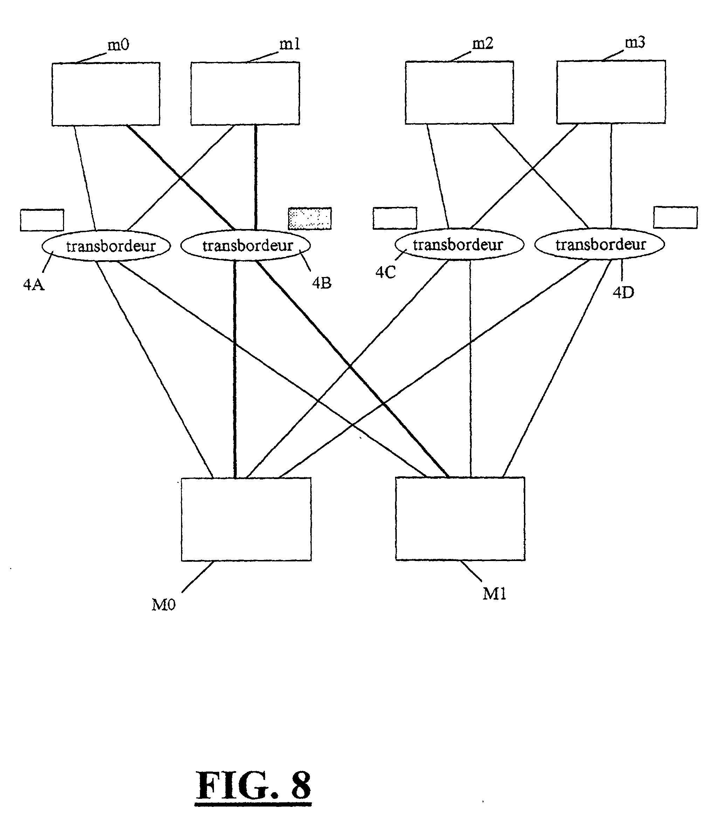

Bien sûr, ce dispositif de purge peut également être utilisé pour l'autotest par balayage du sous ensemble du réseau d'interconnexion des mémoires à un transbordeur, tel par exemple pour le transbordeur (4B) du réseau d'interconnexion représenté schématiquement à la figure 8. Le réseau d'interconnexion de la figure 8 comporte quatre transbordeurs (4A, 4B, 4C et 4D). Par exemple, les quatres transbordeurs (4A, 4B, 4C et 4D) réalisent de manière entrelacée la liaison de quatres zones mémoires (mo, m1, m2, m3) d'extension avec deux zones mémoires (M0, M1) principales. Deux premiers (4A, 4B) transbordeurs sont reliés chacun, d'une part à deux premières zones (m0, m1) mémoire d'extension et d'autre part, aux deux zones mémoires (M0, M1) principales. Les deux autres (4C, 4D) transbordeurs sont reliés chacun d'une part à deux secondes zones (m2, m3) mémoire d'extension et d'autre part aux deux mêmes zones mémoires (M0, M1) principales. Le processus de génération de requêtes spécifiques dans les quatre voies du sous ensemble du réseau d'interconnexion visible d'un transbordeur (4B) et le traitement des réponses correspondantes reçues peut permettre la localisation de pannes éventuelles par le dispositif de purge et ainsi une reconfiguration éventuelle de la liaison dans un mode dégradé ignorant la ou les voies en panne détectée.

## Revendications

1. Procédé de purge des tampons de liaisons séries à haut débit utilisés entre un circuit transbordeur (4) réalisant des opérations de déplacements de données, à savoir des lectures et des écritures, et au moins deux mémoires (12a, 12c), le transbordeur (4) étant relié à chaque mémoire (12a, 12c) par au moins deux voies (400, 401), les opérations de déplacement de données étant constituées chacune d'une requête en déplacement suivie en retour d'une réponse, ou acquittement de la requête, le transbordeur utilisant au moins deux voies bidirectionnelles (400, 401) le reliant à une mémoire (12a, 12c) de manière cyclique avec entrelacement, pour une même opération, chaque tronçon de voie (400, 401) conservant l'ordre d'émission des requêtes, respectivement des réponses, d'un même train de requêtes, respectivement d'un même train de réponses, les réponses empruntant la même paire de voie (400, 401) série que les requêtes dont elles constituent l'acquittement, **caractérisé en ce qu'**il comporte:
- une étape de mise du transbordeur (4) dans un mode de fonctionnement dit d"'absorption" dans lequel les réponses sont acceptées indépendamment de tout ordre d'arrivée sur les voies (400, 401) et sont ignorées par le transbordeur (4),
- une étape de génération d'une requête spécifique d'écriture et d'une requête spécifique de lecture dans tout ou partie des voies (400, 401) de la liaison série, les requêtes spécifiques étant sans effet sur les mémoires (12a, 12c) et comportant chacune un marqueur dit de "barrière" contenu dans un caractère de contrôle précédant et/ou suivant la requête, la marque de barrière se retrouvant également dans un caractère de contrôle associé à la réponse correspondante de chaque requête spécifique,
- une étape de cumul des réponses reçues comportant un marqueur de barrière, et
- une étape de comparaison des réponses reçues comportant un marqueur de barrière avec les requêtes spécifiques générées, pour permettre, soit la localisation d'une panne éventuelle dans le cas où des réponses attendues pour un marqueur de barrière sont manquantes, soit la reconnaissance que la purge de l'ensemble des voies (400, 401) a été effectuée dans le cas où toutes les réponses attendues avec un marqueur de barrière ont été reçues.

2. Procédé de purge des tampons de liaisons séries à haut débit selon la revendication 1 **caractérisé en ce que** l'étape de comparaison des réponses reçues comportant un marqueur de barrière avec les requêtes spécifiques générées comporte une étape de comparaison du nombre de réponses reçues avec marqueur de barrière avec le nombre de requêtes spécifiques générées.

3. Procédé de purge des tampons de liaisons séries à haut débit selon la revendication 1 ou 2 **caractérisé en ce que** le ou les caractères de contrôle associés aux requêtes, respectivement aux réponses, comportent des informations concernant la source d'émission et les chemins (400, 401) empruntés par les requêtes, respectivement par les réponses, l'étape de comparaison des réponses reçues comportant un marqueur de barrière avec les requêtes spécifiques générées comportant une étape de lecture des informations contenues dans les caractères de contrôle des réponses avec marqueur de barrière et qui concernent la source d'émission et les chemins (400, 401) empruntés, pour permettre la localisation de pannes éventuelles de la liaison série.

4. Procédé de purge des tampons de liaisons séries à haut débit selon l'une quelconque des revendications 1 à 3 **caractérisé en ce que** l'étape de mise du transbordeur (4) dans le mode "'absorption" est réalisée alors que la liaison série est déconnectée, la liaison série étant remise en route après la mise du transbordeur (4) dans le mode "'absorption".

5. Procédé de purge des tampons de liaisons séries à haut débit selon l'une quelconque des revendications 1 à 4 **caractérisé en ce que** les requêtes spécifique d'écriture sont constituées de requêtes d'écriture partielle avec un masque nul afin de ne pas modifier l'état de la machine lors de la purge.

6. Procédé de purge des tampons de liaisons séries à haut débit selon l'une quelconque des revendications 1 à 5 **caractérisé en ce que** le transbordeur (4) effectue des transferts de données par tranches de 4K octets maximum et mémorise dans des registres les informations sur le bloc de données transféré en cours et le prochain bloc de données à transférer pour permettre la reprise du transfert de données au point ou il était avant la défaillance.

7. Procédé de purge des tampons de liaisons séries à haut débit selon l'une quelconque des revendications 1 à 6 **caractérisé en ce que** lorsque l'étape de comparaison des réponses reçues, comportant un marqueur de barrière avec les requêtes spécifiques générées, débouche sur la reconnaissance que la purge de l'ensemble des voies (400, 401) a été effectuée, le transbordeur est remis en mode de fonctionnement normal dans lequel il utilise les voies (400, 401) le reliant à une mémoire (12a, 12c) de manière cyclique, avec entrelacement.

8. Procédé de purge des tampons de liaisons séries à haut débit selon l'une quelconque des revendications 1 à 7 **caractérisé en ce que** chaque voie bidirectionnelle (400, respectivement 401) de la liaison série est constituée de deux câbles (1400A, 1400B) unidirectionnels dont les directions de transit de données sont opposées.

9. Procédé de purge des tampons de liaisons séries à haut débit selon l'une quelconque des revendications 1 à 8 **caractérisé en ce qu'**il est utilisé suite à une défaillance de la liaison telle qu'une perturbation électrique, après la remise en service ou réinitialisation de la liaison série et avant le redémarrage de l'application en cours au dernier point de reprise, sans réinitialisation de l'ensemble du système.

10. Procédé de purge des tampons de liaisons séries à haut débit selon l'une quelconque des revendications 1 à 8 **caractérisé en ce qu'**il est utilisé pour l'autotest par balayage du sous ensemble du réseau d'interconnexion des mémoires au transbordeur (4), la localisation de pannes éventuelles permettant la reconfiguration de la liaison dans un mode dégradé ignorant la ou les voies (400, 401) en panne.

11. Dispositif de mise en oeuvre du procédé de purge des tampons de liaisons séries à haut débit selon l'une quelconque des revendications 1 à 8 les liaisons séries à haut débit étant utilisées par un circuit transbordeur (4) réalisant des opérations de déplacements de données, à savoir des lectures et des écritures, entre au moins deux mémoires (12a, 12c) , le transbordeur (4) étant relié à chaque mémoire par au moins deux voies bidirectionnelles (400, 401), les opérations de déplacements de données étant constituées chacune d'une requête en déplacement suivie en retour d'une réponse, ou acquittement de la requête, le transbordeur utilisant les voies (400, 401) le reliant à une mémoire (12a, 12c) de manière cyclique avec entrelacement, pour une même opération, chaque tronçon de voie conservant l'ordre d'émission des requêtes, respectivement des réponses, d'un même train de requêtes, respectivement d'un même train de réponses, les réponses empruntant la même voie (400, 401) que les requêtes dont elles constituent l'acquittement, **caractérisé en ce qu'**il comporte :
- des moyens de mise du transbordeur (4) dans un mode de fonctionnement dit d"'absorption" dans lequel les réponses sont acceptées indépendamment de tout ordre d'arrivée sur les différentes voies (400, 401) et sont ignorées par le transbordeur (4),
- des moyens de génération d'une requête spécifique d'écriture et d'une requête spécifique de lecture dans chacune des voies de la liaison série, les requêtes spécifiques étant sans effet sur les mémoires et des moyens de générer dans ces requêtes un marqueur dit de "barrière" contenu dans un caractère de contrôle précédant et/ou suivant la requête, des moyens de générer un marqueur de barrière dans un caractère de contrôle associé à la réponse correspondante de chaque requête spécifique,
- des moyens de cumul des réponses reçues comportant un marqueur de barrière, et
- des moyens de comparaison des réponses reçues comportant un marqueur de barrière avec les requêtes spécifiques générées pour permettre soit la localisation d'une panne éventuelle dans le cas des réponses attendues comportant un marqueur de barrière sont manquantes, soit la reconnaissance que la purge de l'ensemble des voies a été effectuée dans le cas où toutes les réponses attendues comportant un marqueur de barrière ont été reçues.

12. Dispositif de purge des tampons de liaisons séries à haut débit selon la revendication 11 **caractérisé en ce qu'**il comporte des moyens (11) de comparaison du nombre réponses reçues avec marqueur de barrière avec le nombre de requêtes spécifiques générées.

13. Dispositif de purge des tampons de liaisons séries à haut débit selon la revendication 11 ou 12 **caractérisé en ce qu'**il comporte des moyens de générer des informations concernant la source d'émission et les chemins empruntés par les requêtes, respectivement par les réponses dans le ou les caractères de contrôle associés aux requêtes, respectivement aux réponses, le dispositif de purge comportant des moyens de lecture des informations contenues dans ces caractères de contrôle des réponses avec marqueur de barrière concernant la source d'émission et les chemins empruntés, pour permettre la localisation de pannes éventuelles de la liaison série.

14. Dispositif de purge des tampons de liaisons séries à haut débit selon l'une quelconque des revendications 11 à 13 **caractérisé en ce qu'**il comporte des moyens (11) de traitement de données assurant la réinitialisation de la liaison série suivie de la mise du transbordeur (1) dans le mode de fonctionnement dit d"'absorption".

15. Dispositif de purge des tampons de liaisons séries à haut débit selon la revendication 14 **caractérisé en ce que** les moyens (11) de traitement de données assurent la génération de requêtes spécifiques d'écriture et de lecture, les réponses avec marqueur de barrières aux requêtes spécifiques étant prises en compte par ces mêmes moyens (11) de traitement de données.

16. Dispositif de purge des tampons de liaisons séries à haut débit selon la revendication 15 **caractérisé en ce que** les moyens (11) de traitement de données comportent au moins un registre de cumul dont chaque bit est représentatif de la génération d'une requête spécifique, chaque réponse avec marqueur de barrière reçue par les moyens (11) de traitement provoquant l'écriture d'un bit dit de "barrière" dans le registre de cumul pour permette la comparaison du nombre réponses reçues avec marqueur de barrière avec le nombre de requêtes spécifiques générées.

17. Dispositif de purge des tampons de liaisons séries à haut débit selon la revendication 15 ou 16 **caractérisé en ce que** les moyens de traitement (11) de données comportent des moyens de temporisation permettant la génération d'un message de détection d'une panne dans le cas où une réponse attendue avec marqueur de barrière est manquante après un laps de temps déterminé.

## Claims

1. Method of purging the buffers of high-throughput serial links used between a mover circuit (4) carrying out data movement operations, namely read and write operations, and at least two memories (12a, 12c), the mover (4) being connected to each memory (12a, 12c) by at least two channels (400, 401), the data movement operations each being constituted by a move request followed in return by a response, or acknowledgment of the request, the mover using at least two duplex channels (400, 401) connecting it to a memory (12a, 12c) cyclically with interleaving, for the same operation, each section of channel (400, 401) preserving the order of sending of the requests and responses respectively, of any one request stream or any one response stream respectively, the responses following the same pair of serial channels (400, 401) as the requests of which they constitute the acknowledgment, **characterised in that** it comprises:
- a step of putting the mover (4) into what is known as an "absorption" operating mode in which responses are accepted irrespective of the order in which they arrive over the channels (400, 401) and are ignored by the mover (4),
- a step of generating a specific write request and a specific read request in all or some of the channels (400, 401) of the serial link, specific requests having no effect on the memories (12a, 12c) and each having what is known as a "barrier" marker contained in a control character preceding and/or following the request, the barrier mark also being found in a control character associated with the response corresponding to each specific request,
- a step of cumulating the responses received that have a barrier marker, and
- a step of comparison of the responses received comprising a barrier marker with the specific requests generated, in order to permit either the location of any malfunction if expected responses for a barrier marker are missing, or the recognition that the purging of all the channels (400, 401) has been carried out if all the expected responses with a barrier marker have been received.

2. Method of purging the buffers of high-throughput serial links according to Claim 1 **characterised in that** the step of comparison of the responses received comprising a barrier marker with the specific requests generated includes a step of comparison of the number of responses received with a barrier marker with the number of specific requests generated.

3. Method of purging of the buffers of high-throughput serial links according to Claim 1 or 2 **characterised in that** the control character(s) associated with the requests and the responses, respectively, comprise information concerning the sending source and the paths (400, 401) followed by the requests and by the responses respectively, the step of comparison of the responses received comprising a barrier marker with the specific requests generated comprising a step of reading the information contained in the control characters of the responses with a barrier marker and which concern the sending source and the paths (400, 401) followed, to make it possible to locate any malfunctions in the serial link.

4. Method of purging the buffers of high-throughput serial links according to any one of Claims 1 to 3 **characterised in that** the step of putting the mover (4) into "absorption" mode is carried out while the serial link is disconnected, the serial link being re-started after the mover (4) is put into "absorption" mode.

5. Method of purging the buffers of high-throughput serial links according to any one of Claims 1 to 4 **characterised in that** the specific write requests are constituted by partial write requests with a null mask in order not to modify the state of the machine during purging.

6. Method of purging the buffers of high-throughput serial links according to any one of Claims 1 to 5 **characterised in that** the mover (4) carries out data transfers in sections of 4k bytes maximum and stores in registers the information on the current transferred data block and the next data block to be transferred in order to allow the data transfer to be resumed at the point where it was before the malfunction.

7. Method of purging the buffers of high-throughput serial links according to any one of Claims 1 to 6 **characterised in that**, when the step of comparison of the responses received comprising a barrier marker with the specific requests generated leads to the recognition that the purging of all the channels (400, 401) has been carried out, the mover is put back into normal operating mode in which it uses the channels (400, 401) connecting it to a memory (12a, 12c) cyclically, with interleaving.

8. Method of purging the buffers of high-throughput serial links according to any one of Claims 1 to 7 **characterised in that** each duplex channel (400, 401 respectively) of the serial link is constituted by two one-way cables (1400A, 1400B), which have opposite data transit directions.

9. Method of purging the buffers of high-throughput serial links according to any one of Claims 1 to 8 **characterised in that** it is used following a failure of the link such as an electrical disturbance, after the start-up or reinitialisation of the serial link and before the restarting of the current application at the last restart point, without reinitialising the whole system.

10. Method of purging the buffers of high-throughput serial links according to any one of Claims 1 to 8 **characterised in that** it is used for self-testing by scanning the subset of the network interconnecting the memories with the mover (4), the location of any malfunctions permitting the reconfiguration of the link in a degraded mode ignoring the malfunctioning channel(s) (400, 401).

11. Device for implementing the method of purging the buffers of high-throughput serial links according to any one of Claims 1 to 8, the high-throughput serial links being used by a mover circuit (4) carrying out data movement operations, namely read and write operations, between at least two memories (12a, 12c), the mover (4) being connected to each memory by at least two duplex channels (400, 401), the data movement operations each being constituted by a move request followed in return by a response, or acknowledgment of the request, the mover using the channels (400, 401) connecting it to a memory (12, 12c) cyclically with interleaving, for the same operation, each section of channel preserving the order of sending of the requests and responses respectively, of any one request stream or any one response stream respectively, the responses following the same channel (400, 401) as the requests of which they constitute the acknowledgment, **characterised in that** it comprises:
- means for putting the mover (4) into what is known as an "absorption" operating mode in which responses are accepted irrespective of the order in which they arrive over the various channels (400, 401) and are ignored by the mover (4),
- means for generating a specific write request and a specific read request in each of the channels of the serial link, the specific requests having no effect on the memories and means for generating, in these requests, what is known as a "barrier" marker contained in a control character preceding and/or following the request, means for generating a barrier marker in a control character associated with the response corresponding to each specific request,
- means for cumulating the responses received comprising a barrier marker, and
- means for comparison of the responses received comprising a barrier marker with the specific requests generated in order to permit either the location of any malfunction if the expected responses comprising a barrier marker are missing, or the recognition that the purging of all the channels has been carried out, if all the expected responses comprising a barrier marker have been received.

12. Device for purging the buffers of high-throughput serial links according to Claim 11 **characterised in that** it comprises means (11) for comparison of the number of responses received with a barrier marker with the number of specific requests generated.

13. Device for purging the buffers of high-throughput serial links according to Claim 11 or 12 **characterised in that** it comprises means for generating information concerning the sending source and the paths followed by the requests and by the responses respectively in the control character(s) associated with the requests or the responses respectively, the purging device comprising means for reading the information contained in these control characters for the responses with a barrier marker concerning the sending source and the paths followed, to permit the localisation of any malfunctions in the serial link.

14. Device for purging the buffers of high-throughput serial links according to any one of Claims 11 to 13 **characterised in that** it comprises data processing means (11) ensuring the reinitialisation of the serial link followed by putting the mover (1) into what is known as the "absorption" operating mode.

15. Device for purging the buffers of high-throughput serial links according to Claim 14 **characterised in that** the data processing means (11) ensure the generation of specific write and read requests, the responses with a barrier marker to the specific requests being taken into account by these same data processing means (11).

16. Device for purging the buffers of high-throughput serial links according to Claim 15 **characterised in that** the data processing means (11) comprise at least one accumulator register in which each bit represents the generation of a specific request, each response with a barrier marker received by the processing means (11) causing what is known as a "barrier" bit to be written to the accumulator register in order to permit the comparison of the number of responses received with a barrier marker with the number of specific requests generated.

17. Device for purging the buffers of high-throughput serial links according to Claim 15 or 16 **characterised in that** the data processing means (11) comprise delay means allowing the generation of a malfunction detection message if an expected response with a barrier marker is missing after a given lapse of time.

## Patentansprüche

1. Verfahren zum Leeren von Pufferspeichern für serielle Verbindungen mit hohem Durchsatz, die zwischen einer Umladeschaltung (4), die Datenverschiebungsoperationen, d. h. Lese- und Schreiboperationen, ausführt, und wenigstens zwei Speichern (12a, 12c) verwendet werden, wobei die Umladeeinrichtung (4) mit jedem Speicher (12a, 12c) über wenigstens zwei Wege (400, 401) verbunden ist, wobei die Datenverschiebungsoperationen jeweils aus einer Verschiebungsanforderung, gefolgt von einer Antwort in Gegenrichtung oder einer Quittierung der Anforderung gebildet sind, wobei die Umladeeinrichtung wenigstens zwei bidirektionale Wege (400, 401) verwendet, die sie mit einem Speicher (12a, 12c) in zyklischer Weise, mit Verschachtelung für dieselbe Operation, verbinden, wobei jedes Wegeteilstück (400, 401) die Sendereihenfolge der Anforderungen bzw der Antworten desselben Anforderungszugs bzw. desselben Antwortzugs beibehält, wobei die Antworten dasselbe Paar serieller Wege (400, 401) wie die Anforderungen, wofür sie die Quittierung bilden, benutzen, **dadurch gekennzeichnet, daß** es umfaßt:
- einen Schritt, in dem die Umladeeinrichtung (4) in eine sogenannte "Absorptions"-Betriebsart versetzt wird, in der die Antworten unabhängig von jeder Reihenfolge der Ankunft auf den Wegen (400, 401) angenommen und von der Umladeeinrichtung (4) ignoriert werden,
- einen Schritt, in dem eine spezifische Schreibanforderung und eine spezifische Leseanforderung auf allen Wegen oder einem Teil der Wege (400, 401) der seriellen Verbindung erzeugt werden, wobei die spezifischen Anforderungen für die Speicher (12a, 12c) ohne Wirkung sind und jeweils einen sogenannten "Schranken"-Merker umfassen, der in einem der Anforderung vorhergehenden und/oder nachfolgenden Steuerzeichen enthalten ist und sich außerdem in einem Steuerzeichen befindet, das der jeder spezifischen Anforderung entsprechenden Antwort zugeordnet ist,
- einen Schritt, in dem empfangene Antworten, die einen Schrankenmerker enthalten, kumuliert werden, und
- einen Schritt, in dem die empfangenen Antworten, die einen Schrankenmerker enthalten, mit den erzeugten spezifischen Anforderungen verglichen werden, um entweder die Lokalisierung einer eventuellen Störung, falls die erwarteten Antworten für einen Schrankenmerker fehlen, oder die Erkennung, daß die Leerung sämtlicher Wege (400, 401) ausgeführt worden ist, falls sämtliche erwarteten Antworten mit einem Schrankenmerker empfangen worden sind, zu ermöglichen.

2. Verfahren zum Leeren von Pufferspeichern für serielle Verbindungen mit hohem Durchsatz nach Anspruch 1, **dadurch gekennzeichnet, daß** der Schritt, in dem die empfangenen Antworten, die einen Schrankenmerker enthalten, mit den erzeugten spezifischen Anforderungen verglichen werden, einen Schritt umfaßt, in dem die Anzahl der empfangenen Antworten mit Schrankenmerker mit der Anzahl erzeugter spezifischer Anforderungen verglichen wird.

3. Verfahren zum Leeren von Pufferspeichern für serielle Verbindungen mit hohem Durchsatz nach Anspruch 1 oder 2, **dadurch gekennzeichnet, daß** das oder die den Anforderungen bzw. Antworten zugeordneten Steuerzeichen Informationen bezüglich der Sendequelle und der Wege (400, 401), die von den Anforderungen bzw. den Antworten benutzt werden, enthalten, wobei der Schritt, in dem die empfangenen Antworten, die einen Schrankenmerker enthalten, mit den erzeugten spezifischen Anforderungen verglichen werden, einen Schritt umfaßt, in dem die in den Steuerzeichen der Antworten mit Schrankenmerker enthaltenen Informationen, die die Sendequelle und die benutzten Wege (400, 401) betreffen, gelesen werden, um die Lokalisierung eventueller Störungen der seriellen Verbindung zu ermöglichen.

4. Verfahren zum Leeren von Pufferspeichern für serielle Verbindungen mit hohem Durchsatz nach einem der Ansprüche 1 bis 3, **dadurch gekennzeichnet, daß** der Schritt, in dem die Umladeeinrichtung (4) in die "Absorptions"-Betriebsart versetzt wird, dann ausgeführt wird, wenn die serielle Verbindung unterbrochen ist, wobei die serielle Verbindung erneut in Betrieb genommen wird, nachdem die Umladeeinrichtung (4) in die "Absorptions"-Betriebsart versetzt worden ist.

5. Verfahren zum Leeren von Pufferspeichern für serielle Verbindungen mit hohem Durchsatz nach einem der Ansprüche 1 bis 4, **dadurch gekennzeichnet, daß** die spezifischen Schreibanforderungen aus Anforderungen einer partiellen Schreib Operation mit einer Null-Maske gebildet sind, um den Zustand der Maschine beim Leeren nicht zu modifizieren.

6. Verfahren zum Leeren von Pufferspeichern für serielle Verbindungen mit hohem Durchsatz nach einem der Ansprüche 1 bis 5, **dadurch gekennzeichnet, daß** die Umladeeinrichtung (4) Datenübertragungen in Paketen von höchstens 4 kBytes ausführt und in Registern Informationen über den momentan übertragenen Datenblock und den als nächstes zu übertragenden Datenblock speichert, um die Wiederaufnahme der Datenübertragung an dem Punkt, an dem sie sich vor dem Ausfall befunden hat, zu ermöglichen.

7. Verfahren zum Leeren von Pufferspeichern für serielle Verbindungen mit hohem Durchsatz nach einem der Ansprüche 1 bis 6, **dadurch gekennzeichnet, daß** die Umladeeinrichtung dann, wenn der Schritt, in dem die empfangenen Antworten, die einen Schrankenmerker enthalten, mit den erzeugten spezifischen Anforderungen verglichen werden, zu der Erkenntnis führt, daß die Leerung sämtlicher Wege (400, 401) ausgeführt worden ist,. wieder in die normale Betriebsart zurückgesetzt wird, in der sie die Wege (400, 401) verwendet, die sie in zyklischer Weise mit Verschachtelung mit einem Speicher (12a, 12c) verbinden.

8. Verfahren zum Leeren von Pufferspeichern für serielle Verbindungen mit hohem Durchsatz nach einem der Ansprüche 1 bis 7, **dadurch gekennzeichnet, daß** jeder bidirektionale Weg (400 bzw. 401) der seriellen Verbindung aus zwei unidirektionalen Kabeln (1400A, 1400B) gebildet ist, deren Datentransportrichtungen entgegengesetzt sind.

9. Verfahren zum Leeren von Pufferspeichern für serielle Verbindungen mit hohem Durchsatz nach einem der Ansprüche 1 bis 8, **dadurch gekennzeichnet, daß** es infolge eines Ausfalls der Verbindung wie etwa einer elektrischen Störung, nach der erneuten Indienstnahme oder der Reinitialisierung der seriellen Verbindung und vor dem Neustart der laufenden Anwendung am letzten Wiederaufnahmepunkt ohne Reinitialisierung des gesamten Systems verwendet wird.

10. Verfahren zum Leeren von Pufferspeichern für serielle Verbindungen mit hohem Durchsatz nach einem der Ansprüche 1 bis 8, **dadurch gekennzeichnet, daß** es für den Selbsttest durch Abtastung der Untereinheit des Netzes für den Anschluß von Speichern an die Umladeeinrichtung (4) verwendet wird, wobei die Lokalisierung eventueller Störungen die erneute Konfiguration der Verbindung in einer den oder die gestörten Wege (400, 401) ignorierenden herabgesetzten Betriebsart ermöglicht.

11. Vorrichtung zum Ausführen des Verfahrens zum Leeren von Pufferspeichern für serielle Verbindungen mit hohem Durchsatz nach einem der Ansprüche 1 bis 8, wobei die seriellen Verbindungen mit hohem Durchsatz von einer Umladeschaltung (4) verwendet werden, die Datenverschiebungsoperationen, d. h. Lese- und Schreiboperationen, zwischen wenigstens zwei Speichern (12a, 12c) ausführt, wobei die Umladeeinrichtung (4) mit jedem Speicher über wenigstens zwei bidirektionale Wege (400, 401) verbunden ist, wobei die Datenverschiebungsoperationen jeweils aus einer Verschiebungsanforderung, gefolgt von einer Antwort in Gegenrichtung oder Anforderungsquittierung, gebildet sind, wobei die Umladeeinrichtung Wege (400, 401) verwendet, die sie mit einem Speicher (12a, 12c) in zyklischer Weise, mit Verschachtelung für dieselbe Operation, verbinden, wobei jedes Wegeteilstück die Sendereihenfolge der Anforderungen bzw, der Antworten desselben Anforderungszugs bzw. desselben Antwortzugs beibehält, wobei die Antworten denselben Weg (400, 401) wie die Anforderungen, wofür sie die Quittierung bilden, benutzen, **dadurch gekennzeichnet, daß** sie umfaßt:
- Mittel, die die Umladeeinrichtung (4) in eine sogenannte "Absorptions"-Betriebsart versetzen, in der die Antworten unabhängig von jeder Ankunftsreihenfolge auf den verschiedenen Wegen (400, 401) angenommen und von der Umladeeinrichtung (4) ignoriert werden,
- Mittel, die eine spezifische Schreibanforderung und eine spezifische Leseanforderung auf jedem der Wege der seriellen Verbindung erzeugen, wobei die spezifischen Anforderungen auf die Speicher ohne Wirkung sind, Mittel, die in diesen Anforderungen einen sogenannten "Schranken"-Merker erzeugen, der in jedem der Anforderung vorausgehenden und/oder nachfolgenden Steuerzeichen enthalten ist, und Mittel, die einen Schrankenmerker in einem der entsprechenden Antwort jeder spezifischen Anforderung zugeordneten Steuerzeichen erzeugen,
- Mittel, die empfangene Antworten, die einen Schrankenmerker enthalten, kumulieren, und
- Mittel, die empfangene Antworten, die einen Schrankenmerker enthalten, mit erzeugten spezifischen Anforderungen vergleichen, um entweder die Lokalisierung einer eventuellen Störung, falls erwartete Antworten, die einen Schrankenmerker enthalten, fehlen, oder die Erkenntnis, daß die Leerung sämtlicher Wege ausgeführt worden ist, falls sämtliche erwarteten Antworten, die einen Schrankenmerker enthalten, empfangen worden sind, ermöglichen.

12. Vorrichtung zum Leeren von Pufferspeichern für serielle Verbindungen mit hohem Durchsatz nach Anspruch 11, **dadurch gekennzeichnet, daß** sie Mittel (11) umfaßt, die die Anzahl empfangener Antworten mit Schrankenmerker mit der Anzahl erzeugter spezifischer Anforderungen vergleichen.

13. Vorrichtung zum Leeren von Pufferspeichern für serielle Verbindungen mit hohem Durchsatz nach Anspruch 11 oder 12, **dadurch gekennzeichnet, daß** sie Mittel umfaßt, die Informationen, die die Sendequelle und die von den Anforderungen bzw, von den Antworten benutzten Wege betreffen, in dem oder den Steuerzeichen, die den Anforderungen bzw, den Antworten zugeordnet sind, erzeugen, wobei die Leerungsvorrichtung Mittel zum Lesen der Informationen umfassen, die in diesen Steuerzeichen der Antworten mit Schrankenmerker enthalten sind und die Sendequelle und die benutzten Wege betreffen, um die Lokalisierung eventueller Störungen der seriellen Verbindung zu ermöglichen.

14. Vorrichtung zum Leeren von Pufferspeichern für serielle Verbindungen mit hohem Durchsatz nach einem der Ansprüche 11 bis 13, **dadurch gekennzeichnet, daß** sie Mittel (11) für die Verarbeitung von Daten umfaßt, die die Reinitialisierung der seriellen Verbindung, gefolgt von der Versetzung der Umladeeinrichtung (1) in die sogenannte "Absorptions"-Betriebsart, sicherstellen.

15. Vorrichtung zum Leeren von Pufferspeichern für serielle Verbindungen mit hohem Durchsatz nach Anspruch 14, **dadurch gekennzeichnet, daß** die Datenverarbeitungsmittel (11) die Erzeugung spezifischer Schreib- und Leseanforderungen gewährleisten, wobei die Antworten mit Schrankenmerker auf die spezifischen Anforderungen durch dieselben Datenverarbeitungsmittel (11) berücksichtigt werden.

16. Vorrichtung zum Leeren von Pufferspeichern für serielle Verbindungen mit hohem Durchsatz nach Anspruch 15, **dadurch gekennzeichnet, daß** die Datenverarbeitungsmittel (11) wenigstens ein Kumulationsregister umfassen, wovon jedes Bit die Erzeugung einer spezifischen Anforderung repräsentiert, wobei jede Antwort mit Schrankenmerker, die von den Verarbeitungsmitteln empfangen wird, das Schreiben eines sogenannten "Schranken"-Bits in das Kumulationsregister hervorruft, um den Vergleich der Anzahl empfangener Antworten mit Schrankenmerker mit der Anzahl erzeugter spezifischer Anforderungen zu ermöglichen.

17. Vorrichtung zum Leeren von Pufferspeichern für serielle Verbindungen mit hohem Durchsatz nach Anspruch 15 oder 16, **dadurch gekennzeichnet, daß** die Datenverarbeitungsmittel (11) Verzögerungsmittel umfassen, die die Erzeugung einer Nachricht für die Erfassung einer Störung ermöglichen, falls die erwartete Antwort mit Schrankenmerker nach einer vorgegebenen verstrichenen Zeitdauer fehlt.
